# EUROPEAN PATENT APPLICATION

(11) **EP 0 629 526 A1**
(43) Date of publication of application: **21.12.1994**
(21) Application number: 94830297.1
(22) Date of filing: 16.06.1994
(51) Int. Cl.: B60R 16/00

(54) **Motor vehicle control lever handle unit**

(30) Priority: 16.06.1993 IT MI931297
(71) Applicant: Di Francesco, Silvano, I-64100 Teramo (IT)
(72) Inventor: Di Francesco, Silvano, I-64100 Teramo (IT)
(74) Representative: Cicogna, Franco

(57) **Abstract**

A motor vehicle control lever handle unit (10) comprises a handle element (11) and a connecting element (26) connecting it to the top portion of the motor vehicle control lever, on the handle element (11) being arranged a plurality of controls (16,18,20) of the vehicle and/or of controls for controlling auxiliary services thereof, and/or signaling means, the handle having preferably an anatomic shape .

## Description

### BACKGROUND OF THE INVENTION

The present invention relates to an unit including therein several controls of a motor vehicle, said unit being designed for replacing a conventional handle of a control lever of a motor vehicle.

As is generally known in the motor vehicles provided with a direct transmission, the control lever for controlling the vehicle transmission is provided with a handle, or knob, which is affixed to the top portion of said control lever.

During the running of the vehicle, a driver will engage with his/her left hand the vehicle steering wheel and, by his/her right hand the transmission control lever.

Thus, if the driver desires to actuate for example his radio or compact disc player, or the windshield wiper, he is compelled to disengage the right hand from the steering wheel in order to perform such an operation.

Moreover very frequently the driver drives his vehicle by holding his right hand on the handle of the control lever, even as the control lever must not be operated.

This means that, in addition to the steering wheel, the control lever is the preferred position in which a driver will put his right hand.

For selecting a control to be operated, furthermore, the driver is usually compelled to divert his attention from the road in order to find the control to be actuated (for example the radio or windshield wiper control), which is rather dangerous from a safety standpoint.

### SUMMARY OF THE INVENTION

Accordingly, the main object of the present invention is to render more easy and quick the accesses by a driver to the several controls of a motor vehicle, without compelling the driver to divert his attention from the road in order to select the control to be actuated.

Another object of the present invention is to provide such a control lever handle which is very comfortable.

According to one aspect of the present invention the above mentioned objects, as well as yet other objects, which will become more apparent herein after, are achieved by a control lever handle comprising a handle element and a connecting element for connecting said handle element to a top portion of said control lever, characterized in that on said handle element there are arranged a plurality of controls of the motor vehicle and/or controls for controlling auxiliary means and/or signaling means of said motor vehicle.

The above handle unit will allow the driver (if he does not already engage the control lever handle) to quickly displace his right hand to engage the handle, without diverting his attention from the road, so as to quickly and safely operate the desired control, which will provide a very safe running of the vehicle.

Advantageously, the handle according to the present invention will have an anatomic shape, to be easily engaged by the right hand of the driver.

The control and/or signalling means supported by the subject handle unit can be of a supplementary type of those of the same type provided at conventional positions on the motor vehicle.

According to a further embodiment, however, said control and/or signalling means can also be provided exclusively on the handle.

### BRIEF DESCRIPTION OF THE DRAWINGS

The invention will become more apparent herein after from the following detailed description of a preferred embodiment thereof, given exclusively as an indicative example, and with reference to the accompanying drawings, where:
Figure 1 illustrates the handle unit according to the present invention as seen from the rear portion of the motor vehicle toward the front portion thereof;
Figure 2 is a view of that same handle as seen in an opposite direction,
Figure 3 is a side view of the handle taken according to the arrow 3 of figure 1;
Figure 4 is an exploded view of the handle, seen from the same direction is figure 1, and exclusively related to the universal joint for connecting the handle unit according to the present invention to the control lever of a generic motor vehicle;
Figure 5 is a view, taken in the direction of the arrow 5 of figure 4, of the bottom element of the universal joint of figure 4,
Figure 6 is a view, taken in the direction of the arrow 6 of figure 4, of the top portion of the universal joint of figure 4; and
Figure 7 is a bottom plan view of the bottom portion of figure 4.

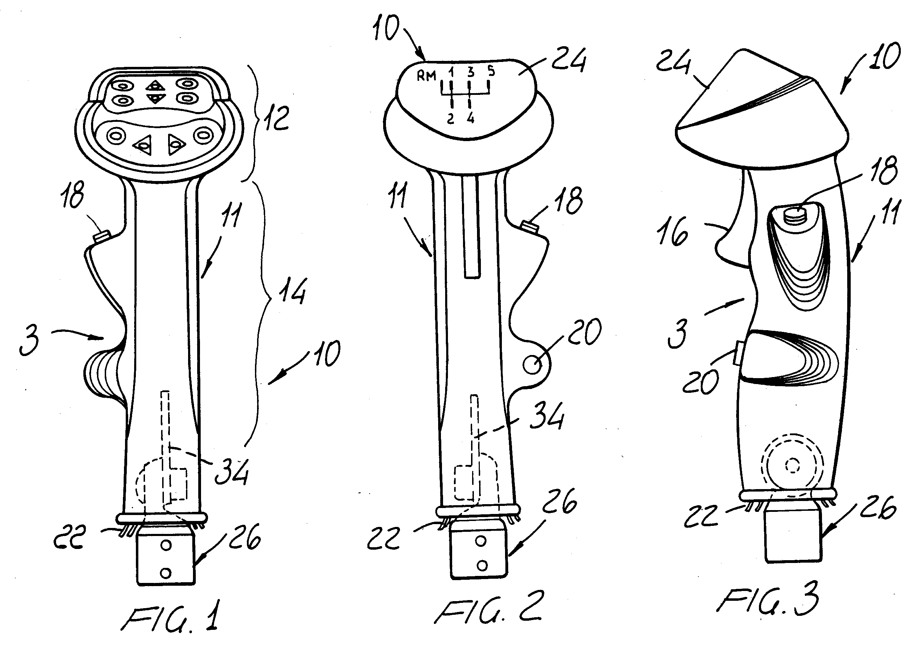

As shown in figures 1 to 3, the handle unit according to the present invention, which has been indicated generally at the reference number 1O, has an anatomic shape so as to be easily and comfortably engaged by the right hand of the driver.

It is supposed there in that the motor vehicle is of the type including a left driver thereby, as shown in figure 1, the driver will be arranged at the left of the handle unit 10.

In this connection it should be apparent that if the motor vehicle would be provided with a right drive (such as for Great Britain), then the subject handle unit will have a mirror-like configuration with respect to that shown in the figures, and the driver will engage it with his left hand.

In the specific embodiment show in figures 1-3, the handle unit 10 comprises a handle element 11, including a head portion 12 and a stem 14.

The head portion 12, in particular, will hold a conventional telecontrol device for radios or compact disc or cassette players, the controls of which have been schematically shown in figure 1.

The handle element 11, in its stem portion 14, is moreover provided with a push-button control or switch 16(figure 3) for operating the upper beams of the motor vehicle, a further push-button control 18 for operating the inner lights of the motor vehicle as well as with yet another push-button control 20 for the centralized closure of the vehicle doors.

The controls 16,18,20 are of an electric type and are connected to their actuators by means of electric wires 22.

On the portion 24 of the head 12 of the handle, moreover, can be also provided the conventional transmission ratio or speed diagram, as shown in fig. 2.

The telecontrol device associated with the handle head 12 will be preferably power supplied by the motor vehicle battery through a suitable electric cable, which will be one of the electric cables indicated in figures 1 to 3. Alternatively, said device can also be supplied by cells which can be introduced into said device upon removing a part of the head 12.

The handle element 11 according to the present invention will be advantageously made of a plastic material of the type meeting the safety standards related to the motor vehicles.

As is clearly shown is figures 1 to 3 , the controls provided on the handle element 11 can be easily and quickly operated by the driver right hand fingers engaging said handle.

In this connection, it should be apparent that further controls can be provided on the handle element 11, provided that they can be easily operated.

As stated, in addition to the above mentioned controls, on the handle signalling means can also be provided, for example of the analogic and/or digital type. An example of this signalling means will be the oil pilot light, the number of controls and signalling means to be arranged on the handle being limited by the available space and facility of operation.

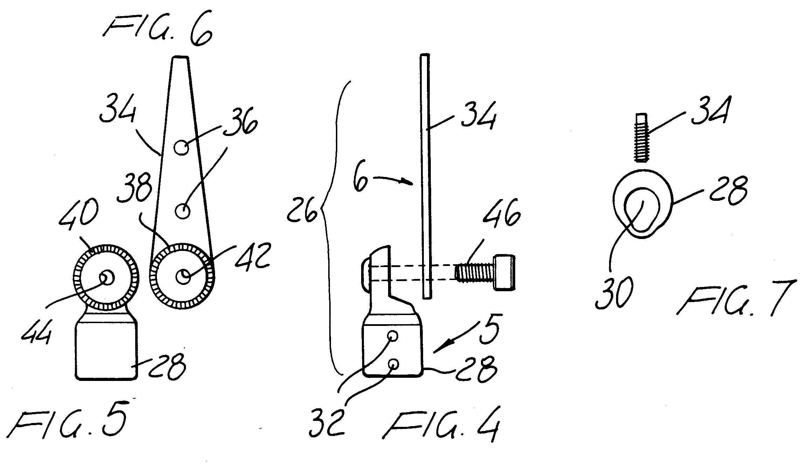

As shown, the handle unit 10 according to the present invention further comprises an universal connection device 26 (which is better shown in figures 4 to 7) allowing to easily connect the handle element 11 to the control lever (not shown) of any desired motor vehicles.

From the mentioned figures, it should be apparent that the connection device 26 substantially comprises a female element 28, of glass shape, with an oval cavity adapted to receive therein the top end portion of the control lever, independently from the diameter thereof.

Through the side surface of the female element 28 there being provided two throughgoing holes 32 which are threaded for engaging corresponding screws one of which, indicated at 34, is shown in figure 7.

By screwing in said screws 34, owing to the oval shape of the cavity 30 of the female element 28, the latter can be fixedly connected to the top portion of the control lever (not shown) of the motor vehicle, independently from the diameter of the cross-section of said lever.

As shown in figure 4, the universal connecting device 26 also comprises a tapering rod 34 which is upwardly tapered to be partially engaged in the mold for molding the handle element 11, before introducing the plastic material. The throughgoing holes 36 provided through the rod 34 will provide a very firm connection between the rod and handle.

The rod 34 is moreover provided with a bottom knurled circumferential portion 38 which can be engaged with a corresponding knurled portion 40 provided on the female element 28 an centered on an axis perpendicular to the control lever as the female element is mounted thereon.

Thus, it will be possible to firmly connect the rod 34 (and accordingly the handle element 11) to the female element 28, which can be in turn firmly coupled to the control lever, by simply introducing into a hole provided on the not shown side of the handle and into the corresponding holes 42 and 44 the screw 46, by fully screwing in it.

As it should be easily apparent from the figures, owing to the universal connection device 26, it will be also possible to provide the rod 34 (and accordingly the handle element 11) with the desired inclination with respect to the control lever (not shown), and moreover it will be possible to suitably displace the handle element 11 in a plane perpendicular to the control lever, owing to the provision of the mentioned oval cavity 30.

## Claims

**1.** A handle unit for a control lever of a motor vehicle, comprising a handle element and a connectLng element for connecting said handle element to a top portion of said control lever, **characterized in that** on said handle unit there are arranged a plurality of controls of said motor vehicle and/or auxiliary controls thereof and/or signalling means.

**2.** A handle unit according to claim 1, wherein at least a portion of said handle unit has all anatomic shape.

**3.** A handle unit according to claim 1, wherein said controls arranged on said handle element are supplementary to conventional controls of a same type and provided at conventional positions of said motor vehicle.

**4.** A handle unit according to claim 1, wherein said controls on said handle element comprise controls for a telecontrol device for a radio, a compact disc player or a cassette player, said telecontrol device being built in said handle element.

**5.** A handle unit according to claim 4, wherein on said handle element there are also provided a control for operating the upper lamps of said motor vehicle and/or a control for the inner lights of said motor vehicle and/or a control for the centralized closure of the doors of said motor vehicle.

**6.** A handle unit according to claim 4, wherein said telecontrol device is supplied by the battery of said motor vehicle.

**7.** A handle unit according to claim 1, wherein said connecting element or device for connecting said handle element and the top portion of the control lever comprises a glass shaped female element with an oval cavity adapted to engage therein said top portion of said control lever independently from the diameter of said lever, locking means being provided for locking said top portion of said control lever within said cavity of said female element, said connecting device further comprising a rod which can be connected to said handle element, an end portion of said rod being provided with a circumferential knurled portion with can be coupled to a corresponding knurled portion provided on said female element and centered on an axis perpendicular to said control lever as said female element is mounted on said control lever.

**8.** A handle unit according to claim 7, wherein said rod is upwardly tapered to be partially engaged in mold means for molding said handle unit before introducing into said mold means a plastic material for forming said handle unit.

**9.** A handle unit according to claim 7 wherein said rod can be slanted according to a plurality of setting positions with respect to said control lever. 10-A handle unit according to claim 7, wherein said oval cavity is so designed and arranged as to allow to displace said handle element in a plane perpendicular to said control lever.

**11.** A handle unit according to claim 1, wherein said handle element comprises a head portion and a stem portion integral therewith, said head portion including, said telecontrol device and said stem portion including push button means for operating said upper lamps, said inner lights and said centralized closure of said doors of said motor vehicle.

**12.** A handle unit according to claim 1, wherein said controls on said handle element are electric types of controls.
